# EUROPÄISCHE PATENTANMELDUNG

(11) **EP 0 578 030 A2**
(43) Veröffentlichungstag der Anmeldung: **12.01.1994**
(21) Anmeldenummer: 93109740.6
(22) Anmeldetag: 18.06.1993
(51) Int. Cl.: G11B 23/50

(54) **Vorrichtung zur Oberflächenbearbeitung von Materialbahnen**

(30) Priorität: 25.06.1992 DE 4220860
(71) Anmelder: BASF Aktiengesellschaft, D-67063 Ludwigshafen (DE)
(72) Erfinder: Fitterer, Horst, D-6800 Mannheim 1 (DE); Becker, Dieter, D-6520 Worms 21 (DE); Nowak, Uwe, Dr., D-6700 Ludwigshafen (DE); Schomann, Klaus Dieter, Dr., D-6700 Ludwigshafen (DE); Mueller, Hans, D-6712 Bobenheim-Roxheim (DE); Richter, Volker, D-6900 Heidelberg (DE); Dingler, Robert, D-7602 Oberkirch (DE); Baur, Reinhold, Dr., D-7601 Ortenberg (DE); Schlatter, Manfred, Dr., D-7800 Freiburg (DE); Huebner, Dietmar, D-7602 Oberkirch (DE)

(57) **Zusammenfassung**

Zum Reinigen oder Glätten der Oberfläche einer Materialbahn (2) wird diese über mindestens eine Klinge (4) geführt, wobei die Bahn mittels Unterdruck gegen die Klingenkante (10) gedrückt wird. Die Öffnung (9) einer neben der Klinge (4) gebildeten Unterdruckkammer (8) ist gegenüber der Klingenkante (10) verstellbar, so daß unterschiedliche Strömungen und Kräfte eingestellt werden können.

## Beschreibung

Die Erfindung betrifft eine Vorrichtung zur Oberflächenbearbeitung von Materialbahnen, bestehend aus einer quer zur Transportbahn der Materialbahn angeordneten Klinge und einer parallel zur Klinge unmittelbar daneben angeordneten Kammer, deren Öffnung der Transportbahn zugewendet ist und die mit einer Unterdruckquelle in Verbindung steht.

In der deutschen Offenlegungsschrift 2 119 094 ist eine Bandreinigungsvorrichtung beschrieben, bei der ein Bandreinigungskopf eine quer zum Band verlaufende, mit einer Unterdruckquelle in Verbindung stehende Öffnung aufweist, in der ein Abstreifteil mit einer hervorstehenden Abstreifkante angeordnet ist. Die beim Reinigungslauf an der Kante sich ansammelnden Partikel sollen dadurch in die Öffnung gesaugt werden. Die Öffnung im Reinigungskopf wird durch das darüberlaufende Band jedoch nahezu vollkommen abgedeckt, so daß eine durch den Unterdruck erzeugte Luftströmung weitgehend unterbunden und damit das Abführen der Partikel beeinträchtigt wird. Ferner ist wegen der festen Kopfgeometrie eine Einstellung auf die jeweilige Bandbeschaffenheit nicht möglich.

Dementsprechend liegt vorliegender Erfindung die Aufgabe zugrunde, eine Vorrichtung zur Oberflächenbearbeitung von Materialbahnen zu schaffen, bei der eine wirkungsvolle Beseitigung von Unregelmäßigkeiten der Bahnoberfläche gewährleistet wird und die an die jeweilige Beschaffenheit der Materialbahn angepaßt werden kann.

Zur Lösung der Aufgabe wird eine Vorrichtung der eingangs geschilderten Art vorgeschlagen, bei der erfindungsgemäß sich die Kammeröffnung unterhalb der wirksamen Klingenkante befindet.

Weitere Einzelheiten und Vorteile der nach der Erfindung vorgeschlagenen Vorrichtung sind anhand in der Zeichnung schematisch dargestellter Ausführungsbeispiele nachfolgend beschrieben:

Es zeigen
Figur 1 die Vorrichtung in einem Längsschnitt, mit einer dreieckigen Saphir-Klinge und einer daneben angeordneten Kammer
Figur 2 die Vorrichtung in mehrfacher Anordnung hintereinander im Längsschnitt, mit Hartmetallklingen zur stufenweisen Bearbeitung mit unterschiedlicher Wirksamkeit.

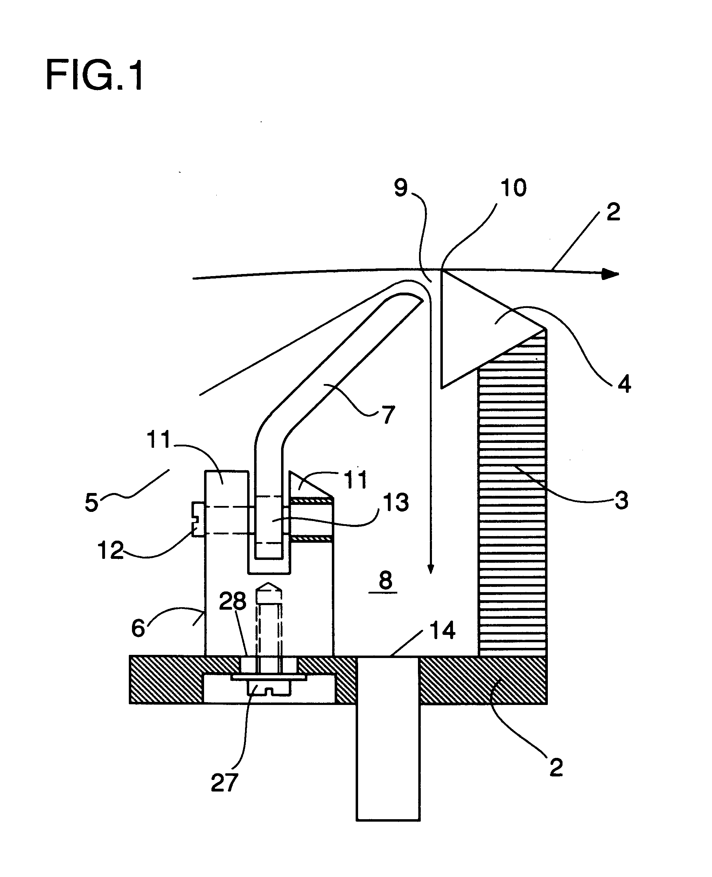

Auf einer Grundplatte 1 (Figur 1) ist quer zur Transportbahn der zu bearbeitenden Materialbahn 2 ein Träger 3 für eine im Querschnitt dreieckförmige Saphir-Klinge 4 befestigt. Klinge und Klingenträger bilden mit einer parallel verlaufenden Wand 5 und einem an der Grundplatte 1 festgeschraubten Teil 6 eine Kammer 8. Die obere Kante eines Teils 7 und damit die Kammeröffnung 9 befinden sich unterhalb der wirksamen Klingenkante 10. Das Teil 7 ist zwischen zwei Klemmbacken 11 mittels einer Schraube 12 eingespannt und zur Höhenverstellung in einem Langloch 13 geführt. Es ist dadurch möglich, den vertikalen Abstand zwischen der Kammeröffnung 9 und der wirksamen Klingenkante 10 zu variieren, beispielsweise zwischen 0,3 und 10,0 mm, vorzugsweise zwischen 0,5 und 3,0 mm. Bei Bedarf kann auch das Teil 6, das mit Schrauben 27 an der Grundplatte 1 festgeschraubt ist, über ein Langloch 28 zusätzlich längs, d.h. in Richtung der Weite der Öffnung 9 verstellt werden. Über eine Bohrung 14 in der Grundplatte ist die Kammer 8 mit einer Unterdruckquelle (in der Zeichnung nicht dargestellt) verbunden. Die über die Klingenkante 10 geführte Materialbahn 2 wird einerseits durch Eintauchen der Klinge in den Materialbahnweg infolge der Umschlingung, andererseits durch die über den Unterdruck verursachte Luftströmung (Pfeil) und die daraus resultierende Anzugskraft gegen die Klingenkante 10 gedrückt bzw. gezogen. Bei entsprechend starker Strömung kann sogar ohne Umschlingung bzw. auch bei negativem Umschlingungswinkel eine für das Entfernen von Partikeln von der Bahnoberfläche bzw. für deren Glättung ausreichende Kontaktkraft von Bahnoberfläche zu Klingenkante erzeugt werden. Dabei ist bei breiten, ungleichmäßigen, beispielsweise verzogenen Materialbahnen von besonderem Vorteil, daß durch die Luftströmung ein gleichmäßiger Anpreßdruck über die gesamte Bahnbreite bewirkt wird, was bei ungleichmäßigen Materialbahnen selbst bei starker Umschlingung bzw. hohem Bahnzug nicht erreicht wird.

Voraussetzung für einen gleichmäßigen Andruck über der Bahnbreite ist, daß die Oberkante von Teil 7 parallel zur Klingenkante 10 verläuft und in der Kammer 8 ein gleichmäßiger Unterdruck herrscht. Wird kein gleichmäßiger Andruck über der Bahnbreite gewünscht, sondern ist es vorteilhafter, Teilbereiche der Materialbahn stärker oder schwächer anzudrücken, kann dies durch entsprechende Gestaltung der Oberkante von Teil 7 erreicht werden, wobei eine Verringerung des Abstandes der Oberkante von Teil 7 zur Klingenkante die örtliche Strömungsgeschwindigkeit und damit den Andruck der Materialbahn an die Klingenkante erhöht. Bei größerem Abstand der Oberkante von Teil 7 zur Klingenkante wird umgekehrt der Andruck reduziert. Ist z.B. die Oberkante von Teil 7 konvex und parallel zur Klingenkante bzw. zur Materialbahn gestaltet, ist in Bahnmitte ein höherer Anpreßdruck wirksam als an den beiden Bahnrändern. Andererseits kann bei konkaver Oberkante von Teil 7 ein verstärkter Andruck an den beiden Bahnrändern erzeugt werden und so die durch das Schneiden stark verschmutzten und verdehnten Schnittkanten besser gereinigt werden.

Die durch den Unterdruck verursachte Strömung (Pfeil) an der Klingenkante führt zur Bildung von Luftwirbeln. Sich sonst an der Klingenkante ansammelnder Abrieb vermögen diese Luftwirbel zu lösen bzw. die Ansammlung zu verhindern. So wird eine zu starke punktuelle Belastung der Materialbahn durch Ansammlung von Abriebpartikel an der Klingenkante und damit die Entstehung von Kratzern vermieden.

Mittels der vorstehend beschriebenen Höhen-und Längsverstellbarkeit der Kammeröffnung 9, der zweckentsprechenden Gestaltung der Oberkante von Teil 7 sowie der Einstellung des Unterdrucks und der Luftführung kann für den jeweiligen Anwendungsfall die geeignete Bearbeitungsintensität über der Bahnbreite gewählt werden.

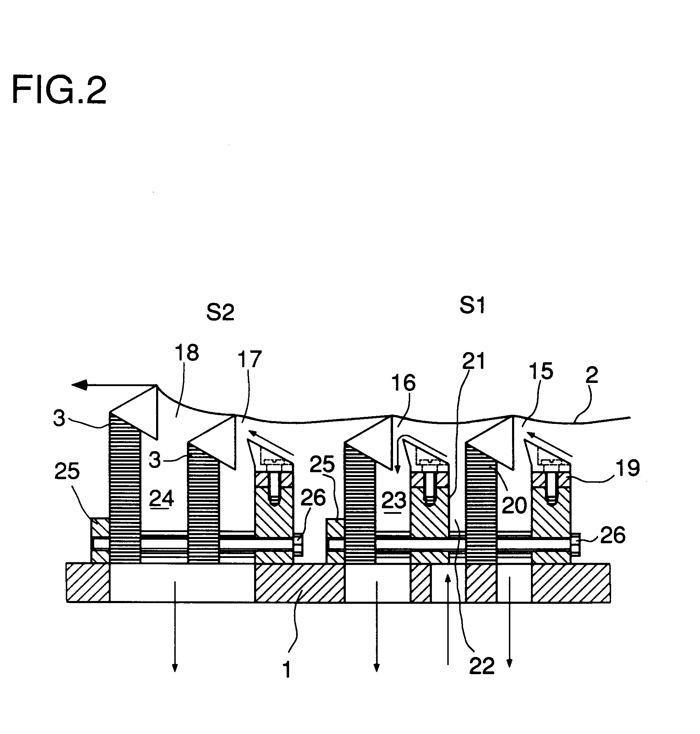

Wie in Figur 2 zu sehen, können mehrere gleiche oder unterschiedliche Vorrichtungen in Serie geschaltet werden, um eine stufenweise unterschiedliche Bearbeitung der Materialbahn zu ermöglichen. So kann beispielsweise in einer ersten Stufe S1 eine Grobbearbeitung bei niedrigem Andruck durch Umschlingung, Bandzug und Luftströmung erfolgen, während in einer zweiten Stufe S2 die vorbearbeitete Materialbahn mit hoher Anpreßkraft durch Umschlingung, den höheren Bahnzug und die höher gewählte Strömungsgeschwindigkeit feinbearbeitet, d.h. geglättet werden kann.

Hierzu sind mehrere Klingen-Kammer-Anordnungen 15, 16, 17 und 18 in Transportrichtung der Materialbahn hintereinander angeordnet, wobei anstatt der Saphir-Klingen alternativ Hartmetallklingen verwendet werden können. Zur Höhenverstellbarkeit der Kammeröffnung 9 ist der Teil 7 hier unter Zwischenlage von unterschiedlich starken Distanzscheiben 19 auf das feststehende Wandteil 6 geschraubt. Der erste Klingenträger 20 bildet dabei mit der nachfolgenden Kammerwand 21 einen Strömungskanal 22 für die zweite Kammer 23. Es kann jedoch auch von Vorteil sein, beide Teile aneinanderstoßend anzuordnen, so daß die Luftströmung verstärkt über die Seitenöffnungen erfolgt und somit ein höherer Andruck im Randbereich erzeugt wird.

In der Stufe S2 wird die letzte Kammer 24 sogar durch zwei hintereinander angeordnete Klingen 4 gebildet, um besonders hohe Anpreßkräfte zu erreichen.

Alle Teile der mehrstufigen Anordnung sind durch Halteblöcke 25 und darin geführte Verschraubungen 26 stabilisiert.

Die stufenweise einstellbare Bearbeitung der Materialbahn bietet insbesondere bei Einsatz der Vorrichtung zur Reduzierung der Abrasivität den Vorteil, daß durch entsprechende Einstellung der Stufen die darin eingesetzten Klingen trotz unterschiedlicher Abrasivität der Materialbahn nahezu gleich abgetragen werden.

Mit den vorstehend beschriebenen Vorrichtungen kann die Oberfläche von unbeschichteten und beschichteten Materialbahnen in unterschiedlicher Breite so bearbeitet werden, daß aufliegende Teilchen entfernt und Ungleichmäßigkeiten der Oberfläche beseitigt oder reduziert werden. Insbesondere können damit bei mit magnetischen Dispersionen beschichteten Folien, d.h. Magnetbändern oder Magnet-Folien, das Fehlerverhalten verbessert und die Abrasivität reduziert werden.

## Patentansprüche

1. Vorrichtung zur Oberflächenbearbeitung von Materialbahnen, bestehend aus einer quer zur Transportbahn der Materialbahn (2) angeordneten Klinge (4) und einer parallel zur Klinge unmittelbar daneben angeordneten Kammer (8), deren Öffnung (9) der Transportbahn zugewendet ist und die mit einer Unterdruckquelle in Verbindung steht, dadurch gekennzeichnet, daß sich die Kammeröffnung (9) unterhalb der wirksamen Klingenkante (10) befindet.

2. Vorrichtung nach Anspruch 1, dadurch gekennzeichnet, daß der vertikale Abstand zwischen Kammeröffnung (9) und wirksamer Klingenkante (10) 0,3 bis 10 mm, vorzugsweise 0,5 bis 3,0 mm beträgt.

3. Vorrichtung nach Anspruch 1 und 2, dadurch gekennzeichnet, daß eines der die Kammerwände (5) bildenden Teile (6,7) sowohl höhenverstellbar als auch in Richtung der Weite der Öffnung (9) verstellbar ist.

4. Vorrichtung nach Anspruch 1 bis 3, dadurch gekennzeichnet, daß die Oberkante des Teils (7) der Kammerwand (5) geradlinig parallel zur Klingenkante (10) verläuft und ein einem gewünschten Anpreßprofil der Materialbahn (2) entsprechendes Profil aufweist.

5. Vorrichtung nach Anspruch 1 bis 4, dadurch gekennzeichnet, daß zwei hintereinander angeordnete Klingen (4) bzw. deren Träger (3) die Kammer (24) bilden.

6. Vorrichtung nach Anspruch 5, dadurch gekennzeichnet, daß in der durch zwei hintereinander angeordnete Klingen (4) bzw. deren Träger (3) gebildeten Kammer (23) ein unterhalb der Klingenkanten (10) endendes Leitblech (27) angeordnet ist.

7. Vorrichtung nach Anspruch 1 bis 6, dadurch gekennzeichnet, daß mehrere Klingen-Kammer-Anordnungen (15-18) in Transportrichtung der Materialbahn (2) hintereinander angeordnet sind.
